**Europäisches Patentamt**

**European Patent Office**

**Office européen des brevets**

(19)

(11) Veröffentlichungsnummer: **0 170 241**
**B1**

# (12) EUROPÄISCHE PATENTSCHRIFT

(45) Veröffentlichungstag der Patentschrift:
**12.04.89**

(21) Anmeldenummer: **85109498.7**

(22) Anmeldetag: **29.07.85**

(51) Int. Cl.⁴: **F 16 L 3/14**, F 16 L 3/00,
E 04 F 17/04, F 24 F 13/00

(54) **Verbindungsstück für Blechkanalaufhängungen.**

(30) Priorität: **01.08.84 DE 3428414**

(43) Veröffentlichungstag der Anmeldung:
**05.02.86 Patentblatt 86/6**

(45) Bekanntmachung des Hinweises auf die Patenterteilung:
**12.04.89 Patentblatt 89/15**

(84) Benannte Vertragsstaaten:
**AT BE CH DE FR IT LI LU NL**

(56) Entgegenhaltungen:
**DE-A- 2 128 915**
**DE-A- 2 528 479**
**DE-U- 7 609 548**
**US-A- 3 301 165**
**US-A- 4 077 592**

(73) Patentinhaber: **Birke, Karl-Heinz, An der Leiten 12,**
**D-8132 Tutzing (DE)**

(72) Erfinder: **Birke, Karl-Heinz, An der Leiten 12,**
**D-8132 Tutzing (DE)**

(74) Vertreter: **Bauer, Robert, Dipl.-Ing. et al, Boeters, Bauer**
**& Partner Patentanwälte Thomas-Wimmer-Ring 14,**
**D-8000 München 22 (DE)**

## Beschreibung

Die Erfindung betrifft ein Verbindungsstück für Blechkanalaufhängungen gemäss dem ersten Teil des Patentanspruchs 1.

Bei horizontalverlaufenden Blechkanälen, wie z.B. Luftkanälen, ist es üblich, diese freihängend über Gewindestangen an der Decke zu verankern. Dies ermöglicht eine freizügige Justierung ihrer Höhenlage. Dabei kann der Kanal auf je ein Paar beiderseitige Gewindestangen miteinander verbindenden Querholmen aus einem Metallprofil aufruhen, was material- wie auch arbeitsaufwendig ist, da die betreffenden Holme im allgemeinen erst am Ort der Verwendung entsprechend der Kanalbreite abgelängt werden.

Es ist auch bereits bekannt, die Gewindestangen, ggf. über entsprechende Verbindungsstücke, im Eckbereich an den Flanschen der Kanalschüsse angreifen zu lassen. Derartige Möglichkeiten zeigen z.B. die DE-AU 2 528 479, die EP-A 0 036 038 und der Firmenprospekt «meztechnik» der Firma Georg Mez GmbH & Co. KG, D-7410 Reutlingen, von dem im ersten Teil des Anspruchs ausgegangen wird.

Bei dem betreffenden Verbindungsstück, das gegenüber demjenigen nach der EP-A 0 036 038 an dem Kanal einen festeren Halt hat, wird die Durchführungsöffnung für die Gewindestange von einer an beiden Enden mit Flanschen versehenen Kunststoffbüchse gebildet, um die das Ende des Fortsatzes herumgebogen ist. Durch den verhältnismässig grossen Abstand dieser Durchführungsöffnungen von dem Kanal ist es bei dieser Lösung wie auch derjenigen nach der EP-A 0 036 038 möglich, die Befestigungslöcher für die Gewindestangen in der Decke bei bereits in seine endgültige Lage gebrachtem Kanal zu bohren, was eine grosse Arbeiterleichterung darstellt. Indessen erfordert die Herstellung des Verbindungsstücks, abgesehen von der Herstellung der Kunststoffbüchse, zumindest zwei Arbeitsgänge, nämlich einen ersten, in dem ein Rohling aus Blech ausgestanzt sowie ggf. mit Sicken profiliert und vorgebogen wird, und einen zweiten, in dem der Fortsatz um die zugelieferte Büchse herumgebogen wird. Dazu noch ist die Büchse im Verhältnis zu ihren recht begrenzten Schallisolationseigenschaften – sie muss ja eine beträchtliche Formsteifigkeit besitzen – materialaufwendig.

Der Erfindung liegt von daher die Aufgabe zugrunde, ein Verbindungsstück gemäss Gattungsbegriff so auszubilden, dass es bei vergleichbarem Abstand der Durchführungsöffnung für die Gewindestange von dem aufzuhängenden Kanal einfacher und materialsparender herstellbar ist, selbst dann, wenn es ebenfalls ein Schallisolationselement aufweisen soll, und dass noch dieses Schallisolationselement kaum irgendwelchen Beschränkungen aus Gründen einer notwendigen Formsteifigkeit unterliegt.

Diese Aufgabe ist erfindungsgemäss durch die kennzeichnenden Merkmale des Anspruchs 1 gelöst.

Das betreffende Verbindungsstück lässt sich in einem einzigen Arbeitsgang herstellen, wobei das Winkelstück samt Fortsatz und Löchern ausgestanzt und noch im gleichen Arbeitsspiel der Fortsatz abgewinkelt wird. Das so erhaltene Blechteil ist bereits fertig für die Aufnahme der Gewindestange. Im Bedarfsfall kann jedoch an deren Durchführung ein Schallisolationselement Verwendung finden, das etwa die Form von Scheiben oder einer Muffe aus Gummi oder irgendeinem sonstigen, hinsichtlich seiner Schallisolationseigenschaften optimalen Material hat.

Die abhängigen Ansprüche geben vorteilhafte Ausgestaltungsmöglichkeiten des betreffenden Verbindungsstücks an. Dabei trägt die Ausführung nach Anspruch 2 dem Umstand Rechnung, dass eine Aufhängung vertikaler ebenso wie horizontaler Kanalabschnitte an der Decke erwünscht sein kann und das gleiche Verbindungsstück beiden Möglichkeiten Rechnung tragen soll. Die Ausbildung nach Anspruch 3 bringt neben einer gewissen Materialersparnis den Vorteil mit sich, dass die Gewindestange samt aufgeschraubter Mutter nicht unter den Kanalflansch vorstehen muss. Die Massnahme nach Anspruch 4 hat den Vorteil, dass das Verbindungsstück an dem Kanal auch hinsichtlich seiner Winkellage formschlüssig gehalten wird und mithin kein Biegemoment in die Gewindestange eingeleitet werden kann. Das Merkmal des Anspruchs 5 unterscheidet das betreffende Verbindungsstück vorteilhaft von demjenigen des gattungsbildenden Standes der Technik, wenngleich es aus der bereits genannten DE-A 2 528 479 bzw. dem DE-U 7 609 548 an sich bekannt ist.

Nachfolgend werden Ausführungs- und Anwendungsbeispiele des erfindungsgemässen Verbindungsstücks anhand der Figuren näher beschrieben. Dabei zeigt

Fig. 1 eine Draufsicht eines entsprechenden Verbindungsstücks an seiner Anbringungsstelle, gesehen in Längsrichtung des Kanals,

Fig. 2 eine Seitenansicht aus der Ebene der Linie II-II in Fig. 1, teilweise geschnitten, und

Fig. 3 eine Draufsicht des Verbindungsstücks mit eingesetztem Schallisolations-Formteil, teilweise geschnitten.

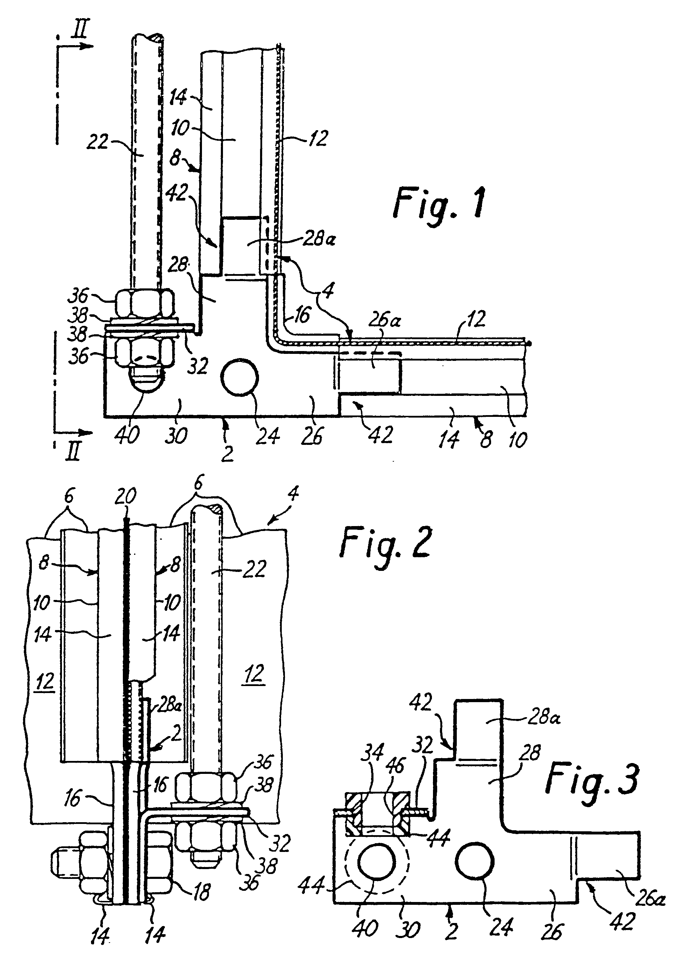

Die Figuren 1 und 2 zeigen das betreffende Verbindungsstück 2 montiert an einem an der Decke aufgehängten horizontalen Blechkanal 4. Der Kanal 4 besteht aus aufeinanderfolgenden Schüssen 6 (in den Figuren nur bruchstückweise dargestellt), die mit Flanschen 8 aneinanderschliessen. Die Flansche 8 selbst bestehen in der heute gebräuchlichen Weise im wesentlichen aus leistenförmigen, hohlen Blechprofilen 10, die auf die Stirnkanten der Kanalwände 12 aufgesteckt und sodann mit diesen verschweisst sind. Jedes der Blechprofile 10 besitzt rückwärtig einen erhabenen Rand 14. In die Enden der Blechprofile 10 sind aus stärkerem Blech gestanzte und geprägte Eckstücke 16 eingesetzt, die zusammen mit den Blechprofilen eine im wesentlichen ebene Stirnfläche bilden. Die Eckstücke 16 weisen in ihrem Scheitelbereich Durchführungsöffnungen für Verbindungsschrauben 18 (in Fig. 1 weggelassen) auf, mit denen die Flansche 8 lediglich im Eckbereich miteinander verbunden sind. Zwischen die miteinander verbundenen Flansche 8 ist eine Dichtung 20 eingelegt.

Die Aufhängung erfolgt zu beiden Seiten des Kanals 4 über Gewindestangen 22, die über die Verbindungsstücke 2 an den Flanschen 8 angreifen. Die Verbindungsstücke 2 bestehen aus ans Blech gefertigten im wesentlichen flachen Winkelstücken, die, ebenso wie die Eckstücke 16, in ihrem Scheitelbereich eine Durchführungsöffnung, 24, für die betreffende Verbindungsschraube 18 aufweisen. Der in Fig. 1 horizontalliegend dargestellte Schenkel 26 der Verbindungsstücke 2 ist aussenseitig über den zweiten, in der Figur vertikal verlaufend gezeichneten Schenkel 28 hinaus verlängert und weist an der betreffenden Verlängerung 30 auf der Seite des Schenkels 28 eine Abwinkelung 32 auf. Die Abwinkelung 32 enthält eine Durchführungsöffnung 34 (Fig. 3) für die betreffende Gewindestange 22, an der das Verbindungsstück mittels zweier Muttern 36 mit darunter eingelegten Sicherungsringen 38 festgelegt ist. Eine entsprechende Durchführungsöffnung 40 befindet sich in der Verlängerung 30 parallellaufend zu der Durchführungsöffnung 24, um auch vertikalverlaufende Kanalabschnitte auf ähnliche Weise an hängenden Gewindestangen anbringen zu können. Dabei weist die Gewindestange zum Kanal jeweils einen Abstand auf, der ein Bohren des betreffenden Befestigungsloches in der Decke bei bereits endgültig positioniertem Kanal ohne weiteres möglich macht. Dies ist deshalb erwünscht, weil auf diese Weise am einfachsten und präzisesten der Ort der jeweils erforderlichen Bohrung bestimmt werden kann.

Wie aus den Figuren 1 und 3 weiter ersichtlich, besitzen die beiden Schenkel 26 und 28 des Verbindungsstücks 2 in ihrem Endbereich aussenseitige Aussparungen 42, um sich satt in das jeweilige Blechprofil 10 einzufügen. Des weiteren sind die betreffenden Schenkelenden 26a und 28a, wie aus Fig. 2 ersichtlich, abgekröpft, um an der nämlichen Stelle der Blechstärke des Blechprofils 10 zwischen Eckstück 16 und Verbindungsstück 2 Rechnung zu tragen. Auf diese Weise erhält ein jedes der Verbindungsstücke 2 in bezug auf den betreffenden Flansch 8 formschlüssig eine ganz bestimmte, gleichbleibende Position.

Das in Fig. 3 dargestellte Verbindungsstück 2 unterscheidet sich von demjenigen nach den Figuren 1 und 2 lediglich dadurch, dass die Durchführungsöffnung 34 weiter gewählt ist, um ein aus Gummi oder dergl. bestehendes, in diesem Falle zweiteiliges, handelsübliches Schallisolations-Formteil 44 aufzunehmen. Das Formteil 44 nimmt in seiner zylindrischen Bohrung 46 seinerseits die Gewindestange 22 auf.

Es versteht sich, dass ebenso wie die Durchführungsöffnung 34 natürlich auch die Durchführungsöffnung 40 ein entsprechendes Schallisolations-Formteil aufnehmen kann (in Fig. 3 gestrichelt angedeutet). Im übrigen wird sich die präzise Form des hier in Rede stehenden Verbindungsstücks nach den jeweiligen Dimensionen, dem Flanschprofil und ggf. der Art des verwendeten Schallisolations-Formteils richten.

## Patentansprüche

1. Verbindungsstück (2) für Blechkanal-Aufhängungen, welches einerseits an einem Flansch (8) eines der Blechkanalschüsse (6) in dessen Eckbereich mittels einer Flanschverbindungsschraube (18) und andererseits an einer im wesentlichen vertikalverlaufenden Gewindestange (22) anbringbar ist und im wesentlichen aus einem Blechstanzteil in Gestalt eines flachen Winkelstücks besteht, das eine Durchführungsöffnung (24) für die Flanschverbindungsschraube in Form einer in seinem Scheitelbereich vorgesehenen Durchbrechung sowie eine weitere Durchführungsöffnung (34) für die Gewindestange an einem von dem eigentlichen Winkelstück weg parallel zu dem abgewandten Schenkel (26) des Winkelstücks nach aussen gerichteten abgebogenen Fortsatz (30) aufweist, dadurch gekennzeichnet, dass die Abbiegung des Fortsatzes (30) aus einer zur Ebene des Winkelstücks normalen seitlichen Abwinkelung (32) besteht, in der die Durchführungsöffnung (34) für die Gewindestange (22) ebenfalls als Durchbrechung ausgebildet ist.

2. Verbindungsstück nach Anspruch 1, dadurch gekennzeichnet, dass sich eine zweite Durchführungsöffnung (40) für die Gewindestange (22) in Form einer Durchbrechung in dem Fortsatz (30) selbst, parallellaufend zu der Durchführungsöffnung (24) für die Flanschverbindungsschraube (18), befindet.

3. Verbindungsstück nach Anspruch 1 oder 2, dadurch gekennzeichnet, dass sich die Abwinkelung (32) auf der der Innenseite des abgewandten Schenkels (26) des Winkelstücks entsprechenden Seite des Fortsatzes (30) befindet.

4. Verbindungsstück nach einem der vorhergehenden Ansprüche, dadurch gekennzeichnet, dass die beiden Schenkel (26, 28) des Winkelstücks in Anpassung an eine ggf. vorhandene Profilform der von dem betreffenden Eckbereich ausgehenden Flanschabschnitte des Kanals (4) abgekröpft und/oder ausgespart sind.

5. Verbindungsstück nach einem der vorhergehenden Ansprüche, dadurch gekennzeichnet, dass die Durchführungsöffnung (34, 40) für die Gewindestange (22) einen schallisolierenden Einsatz in Gestalt eines ein- oder zweiteiligen weichelastischen Formteils (44) aufweist.

## Claims

1. Joining piece (2) for sheet metal chanel suspensions which is attachable on the one hand to a flange (8) of one of the sheet metal channel sections (6) in the corner region thereof by means of a flange connecting screw (18) and on the other hand to a substantially vertically extending threaded rod (22) and consists subtantially of a sheet metal stamped part in the form of a flat angle piece which comprises a passage opening (24) for the flange connecting screw in the form of a hole provided in its apex region and a further passage opening (34) for the threaded rod in a bent extension (30) directed outwardly away from the actual angle piece parallel to the remote leg (26) of the angle piece, characterized in that the bend of the extension (30) consists of a lateral angling (32) which is normal to the plane of the angle piece and in which the passage opening (34) for the threaded rod (32) is also formed as hole.

2. Joining piece according to claim 1, characterized in that a second passage opening (40) for the threaded rod (22) is disposed in the form of a hole in the extension (30) itself running parallel to the passage opening (24) for the flange connecting screw (18).

3. Joining piece according to claim 1 or 2, characterized in that the angling (32) is disposed on the side of the extension (30) corresponding to the inner side of the remote leg (26) of the angle piece.

4. Joining piece according to any one of the preceding claims, characterized in that the two legs (26, 28) of the angle piece are bent and/or cut away in adaptation to a possibly present profile form of the flange portions of the channel (4) emanating from the respective corner region.

5. Joining piece according to any one of the preceding claims, characterized in that the passage opening (34, 40) for the threaded rod (22) comprises a sound-insulating insert in the form of a one-piece or two-piece soft elastic moulding (44).

**Revendications**

1. Pièce de raccord (2) pour la suspension de canalisations en fer blanc, qui peut être disposée, d'une part sur une bride (8) d'un des tronçons (6) de la canalisation dans la région d'angle de celui-ci au moyen d'une vis (18) de raccord des brides et, d'autre part, sur une tige filetée (22) s'étendant sensiblement dans la direction verticale, et qui consiste sensiblement en une pièce découpée dans une tôle ayant la forme d'un raccord angulaire plat, qui présente une ouverture (24) pour le passage de la vis de raccord des brides ayant la forme d'une découpure prévue dans la région de son sommet, ainsi qu'une autre ouverture (34) pour le passage de la tige filetée, sur un prolongement (30) coudé s'étendant dans la direction opposée au raccord angulaire proprement dit, orienté vers l'extérieur parallèlement à la branche (26) opposée du raccord angulaire, caractérisée en ce que la courbure du prolongement (30) consiste en une pliure (32) normale par rapport au plan du raccord angulaire, dans laquelle l'ouverture (34) pour le passage de la tige filetée (22) a également la forme d'une découpure.

2. Pièce de raccord selon la revendication 1, caractérisée en ce qu'une deuxième ouverture (40) pour le passage de la tige filetée (22) sous forme d'une découpure est située dans le prolongement (30) même, parallèle à l'ouverture (24) pour le passage de la vis (18) de raccord des brides.

3. Pièce de raccord selon la revendication 1 ou 2, caractérisée en ce que la pliure (32) est située sur le côté du prolongement (30) correspondant au côté intérieur de la branche (26) opposée du raccord angulaire.

4. Pièce de raccord selon l'une des revendications précédentes, caractérisée en ce que les deux branches (26, 28) du raccord angulaire possèdent un coude et/ou un évidement pour s'adapter à un profil éventuellement existant des portions de bride partant de la région angulaire de la canalisation.

5. Pièce de raccord selon l'une des revendications précédentes, caractérisée en ce que l'ouverture (34, 40) pour le passage de la tige filetée (22) présente une garniture d'isolation acoustique ayant la forme d'une pièce moulée (44) souple en une ou deux parties.

Fig. 1

Fig. 2

Fig. 3